# EUROPÄISCHE PATENTSCHRIFT

(11) **EP 1 531 345 B1**
(45) Veröffentlichungstag und Bekanntmachung des Hinweises auf die Patenterteilung: **29.11.2006**
(21) Anmeldenummer: 04026538.1
(22) Anmeldetag: 09.11.2004
(51) Int. Cl.: G01V 8/10, F16P 3/14

(54) **Justierhilfe für Lichtschranken**
Alignment aid for lightcurtains
Aide d'alignement pour appareils d'arrêt de lumière

(30) Priorität: 14.11.2003 DE 20317622 U
(43) Veröffentlichungstag der Anmeldung: 18.05.2005
(73) Patentinhaber: SICK AG, 79183 Waldkirch (DE)
(72) Erfinder: Bergbach, Roland, 79341 Kenzingen (DE)

(56) Entgegenhaltungen:
- EP-A- 0 005 853
- WO-A-00/67932
- US-A- 3 535 539

## Beschreibung

Die Erfindung betrifft eine Lichtschranke nach dem Oberbegriff des Anspruchs 1.

Derartige Lichtschranken werden zum berührungslosen Detektieren von Objekten eingesetzt. Insbesondere beim Einsatz dieser Lichtschranken zum Zwecke des Unfallschutzes an Werkzeugmaschinen, wie zum Beispiel an Biege- oder Abkantpressen muss zur sicheren Funktion bei der Montage eine exakte Justage berücksichtigt werden. Die erforderliche exakte Justage ist unter anderem darin begründet, dass der Sende- und Empfangswinkel möglichst klein zu halten ist (kleiner 2,5°), um die Gefahr der Umspiegelung und damit der Nichterkennung von Objekten zu vermeiden. Ebenfalls wird bei Lichtschranken mit kleinem Sende- und Empfangswinkel die gegenseitige Beeinflussung durch benachbarte Systeme sowie die Fremdlichtempfindlichkeit sehr eingeschränkt bzw. ganz ausgeschlossen. Eine besondere Bedeutung kommt der Justage von Lichtsender und Lichtempfänger in den Fällen zu, in denen das Empfangselement aus mehreren einzelnen Photoelementen zeilen- oder matrixförmig zusammengefügt ist. Eine fehlerhafte Justage hätte dabei zur Folge, dass die Informationen, die in der Lichtverteilung des Lichtbündelquerschnittes liegen, nicht vollständig ausgewertet werden können.
Neben der exakten Justage bei der Montage der Lichtschranke ist auch eine erhöhte Anforderung hinsichtlich der mechanischen Stabilität an die entsprechenden Befestigungskomponenten zu stellen.

Um diese Justage überhaupt durchführen zu können, sind verschiedene Justagehilfsmittel wie z.B. aus der EP 0005853 A1 oder US 3535539 A bekannt. So kann besonders bei großen Abständen vom Lichtsender zum Lichtempfänger die jeweilige Justage mit einem fest eingebauten oder externen adaptierbaren Zielfernrohr durchgeführt werden. Weiterhin ist bekannt, die Justage unter Zuhilfenahme des Lichtschrankensignals vorzunehmen. Bei dieser Methode wird die Ausrichtung des Lichtsenders und des Lichtempfängers so lange verändert, bis das Empfangssignal einen maximalen Wert erreicht hat. Dazu ist es bekannt, zum Beispiel in Abhängigkeit von der Größe des Empfangssignals die Blinkfrequenz einer Anzeigediode zu verändern.

Nachteilig bei diesen bekannten Verfahren zur Justage der Lichtschranke sind zum Beispiel bei der Zielfernrohrlösung die damit verbundenen Kosten und der benötigte Platzbedarf; bei der Lösung unter Zuhilfenahme des Empfangssignals ist dagegen der zum Ausrichten erforderliche Zeitaufwand recht hoch.

Der Erfindung liegt die Aufgabe zugrunde, eine Lichtschranke mit einer verbesserten Justagevorrichtung bereitzustellen, wodurch die Justagezeit verringert wird und insbesondere die zur sicheren Funktion notwendige exakte Ausrichtung des Lichtempfängers auf den Lichtsender durchgeführt werden kann.

Zur Lösung dieser Aufgabe sieht die Erfindung eine Lichtschranke mit den Merkmalen von Anspruch 1 vor.

Der Vorteil dieser erfindungsgemäßen Lichtschranke ist also darin zu sehen, dass mit einer preiswerten Justageplatte, in welcher eine Lichteintrittsöffnung und eine Zielscheibe angeordnet sind und unter Ausnutzung der Reflexion an einer standardmäßig im Lichtempfänger vorhandenen optischen Grenzfläche, der Lichtempfänger exakt auf den Lichtsender ausrichtbar ist. Insbesondere, wenn beim Lichtempfänger ein großer Strahlquerschnitt vorhanden ist und damit eine große Zielscheibe mit einem großem Fangbereich einsetzbar ist, kommen die Vorteile dieser Ausführung sehr deutlich zur Geltung.

Da der Durchmesser der Lichteintrittsöffnung in der Justageplatte nur wenige Millimeter groß ist (ca. 5% der Eintrittsfläche der Empfangsoptik), ist der dadurch entstehende Lichtspot auch ohne weitere Abbildungsoptik gut sichtbar.

In einer vorteilhaften Ausführungsform der Justageplatte sind die Lichteintrittsöffnung, die optische Achse der Empfangsoptik und die Zielscheibe so angeordnet, dass diese auf einer Linie liegen. Wenn dabei die Lichteintrittsöffnung im Randbereich der Empfangsoptik angeordnet ist, steht für die Größe der Zielscheibe ein maximaler Restbereich der Empfangsoptik zur Verfügung. Die dadurch mögliche große Zielscheibe hat zur Folge, dass das auf der Zielscheibe darstellbare Sichtfeld einen großen Fangbereich abdeckt. Aus diesem Grunde kann bereits bei einer groben Justage des Lichtempfängers auf den Lichtsender die Justagehilfe angewendet werden.

Die Zielscheibe ist auf der Justageplatte als Mattscheibe ausgebildet, weil der den Justagezustand anzeigende Lichtspot in seiner Intensität wenig gedämpft wird und dadurch mit gutem Kontrast sichtbar ist.

Um den Lichtspot im Zuge der Lichtempfängerjustage exakt auf den optimalen Justagepunkt ausrichten zu können, sind auf der Zielscheibe zweckmäßige Visierlinien angeordnet, wobei diese, bevorzugt um den Sollpunkt herum, als ringförmige Linien ausgebildet sind.

Erfindungsgemäß wird der durch die Lichteintrittsöffnung erzeugte Lichtspot innerhalb des Lichtempfängers zur Zielscheibe gespiegelt. Eine zweckmäßige Ausgestaltung sieht dazu vor, dass für diese Spiegelung im Lichtempfänger kein zusätzlicher Spiegel angebracht werden muss, sondern die Oberflächenreflexion an der optischen Grenzfläche eines optischen Filters im Lichtempfängers ausgenutzt wird. Eine Modifikation dieses Erfindungsgedankens sieht dabei vor, dass der Reflexionsgrad an der den Lichtspot spiegelnden Oberfläche noch durch Aufbringen von optischen Schichten in ihrer Güte anpassbar ist.

Die erfindungsgemäße Ausführung einer Lichtschranke mit Justageplatte und interner Spiegelfläche ist insbesondere dann von Vorteil, wenn das Empfangselement aus mehreren einzelnen Photoelementen besteht, die zeilen- oder matrixförmig zusammengefügt sind. Bei derartigen Lichtschranken, mit denen nicht nur die Anwesenheit eines Objektes auf einer Lichtstrahlstrecke erkannt wird, sondern gleichzeitig noch eine Information über die Lage des Objektes innerhalb des Lichtstrahlquerschnitts möglich ist, sind die Anforderungen an die exakte Justage des Lichtempfängers auf den Lichtsender besonders wichtig. Mit dieser vorteilhaften Erfindung zur Vermeidung einer Fehljustage ist somit auch eine optimale Funktion hinsichtlich der Objekterkennung über den Lichtstrahlquerschnitt gewährleistet.

Schließlich sieht eine weitere Ausbildung der Erfindung vor, dass der Lichtsender und der Lichtempfänger mit justierbaren Halterungen als Sicherheitseinrichtung an einer Maschine, insbesondere einer Presse, zur Überwachung des Schutzbereiches befestigt ist.

Die Weiterbildung, gemäß Anspruch 10, hat den Vorteil, dass während der Arbeitsbewegung die Schutzeinrichtung mit dem beweglichen Werkzeugteil der Presse mitgeführt wird und somit die genaue Ausrichtung der Lichtschranke auf den Schutzbereich stets erhalten bleibt.

Die Erfindung wird im Folgenden beispielhaft unter Bezugnahme auf die Zeichnungen im Einzelnen erläutert. In der Zeichnung zeigen:
- Fig. 1: eine schematische Frontansicht einer Biegepresse;
- Fig. 2: einen schematischen Schnitt einer Lichtschranke entlang deren optischer Achse;
- Fig. 3: eine beispielhafte Ausgestaltung einer Justageplatte.

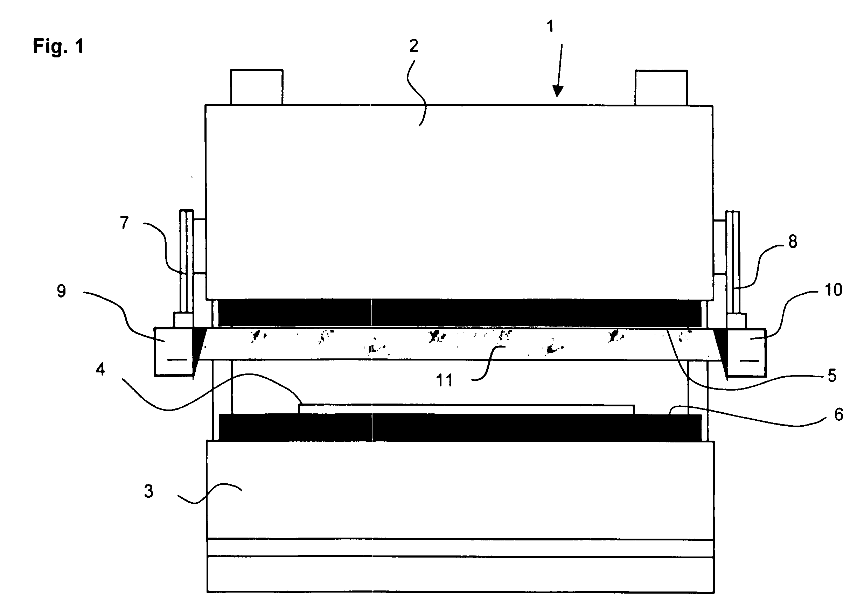

Eine in Fig. 1 gezeigte Biegepresse 1 besitzt ein bewegliches Werkzeugteil 2, das während eines Arbeitszyklusses vertikal nach unten gegen ein feststehendes Werkzeugteil 3 bewegt wird. Zwischen dem beweglichen Werkzeugteil 2 und dem feststehenden Werkzeugteil 3 ist das zu bearbeitende Werkstück 4 eingebracht. Am beweglichen Werkzeugteil 2 sowie am feststehenden Werkzeugteil 3 sind zur Bearbeitung des Werkstückes 4 aufeinander abgestimmte Werkzeugkanten 5 und 6 angeordnet. Während des Arbeitszyklusses wird der Abstand zwischen den beiden Werkzeugkanten 5 und 6 allmählich geschlossen. Der Arbeitszyklus der Biegepresse wird von einer nicht dargestellten Steuereinheit geführt. Das Auslösesignal kann dazu von einem Hand- oder Fußschalter bzw. einem automatischen Maschinentakt aktiviert werden.
Am beweglichen Werkzeugteil 2 sind über die beiden justierbaren Halterungen 7 und 8 eine Lichtschranke, bestehend aus einem Lichtsender 9 und einem Lichtempfänger 10, angebracht. Die Montage des Lichtsenders 9 und des Lichtempfängers 10 ist derart ausgeführt, dass sich ein Lichtstahlbündel 11 zwischen dem Lichtsender 9 und dem Lichtempfänger 10 unmittelbar vor der Werkzeugkante 5 ausbildet. Befindet sich während der vertikalen Abwärtsbewegung des beweglichen Werkzeugteiles 2 ein Objekt, zum Beispiel eine Hand oder ein Finger innerhalb des Lichtstrahlbündels 11, so wird dies von der Lichtschranke erkannt und der Steuereinheit mitgeteilt, welche sodann unmittelbar die gefahrbringende Bewegung beendet.

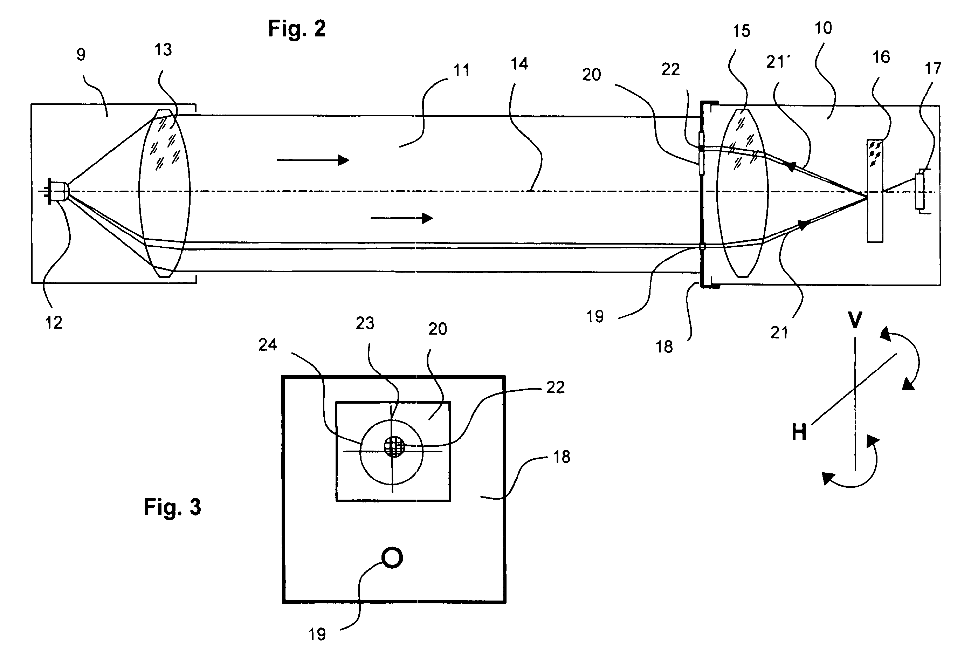

Die Figur 2 zeigt den Lichtsender 9 mit einer Lichtquelle 12 und einer Sendeoptik 13. Die Sendeoptik 13 formt das vom Lichtsender 12 ausgestrahlte Licht zu einem annähernd parallelen Lichtstrahlbündel 11, das auf den Lichtempfänger 10 gerichtet ist. Im Lichtempfänger 10 sind entlang einer optischen Achse 14 eine Empfangsoptik 15, ein optisches Filter 16 sowie ein Empfangselement 17 vorhanden. Das optische Filter 16 hat dabei die Aufgabe, das Empfangselement 17, welches beim Einsatz derartiger Lichtschranken zur Pressenabsicherung zweckmäßiger aus einer Matrix von Empfangselementen besteht, im Funktionsbetrieb vor störender Fremdlichtbestrahlung zu schützen.

Zur Justage ist wie in Figur 2 gezeigt, ist auf dem Lichtempfänger 10, vor der Empfangsoptik 15 eine Justageplatte 18 exakt und reproduzierbar aufgesetzt, in welcher eine Lichteintrittsöffnung 19 und eine Zielscheibe 20 eingebaut sind. Diese Justageplatte 18 lässt von dem auftreffenden Lichtbündel 11 nur im Bereich der Lichteintrittsöffnung 19 einen kleinen Lichtbündelausschnitt 21 in den Lichtempfänger eintreten. Der Lichtbündelausschnitt 21 trifft nach Ablenkung an der Empfangsoptik 15 auf die optische Grenzfläche des optischen Filters 16. Eine Teilmenge des auftreffenden Lichtbündelausschnittes 21 wird dabei als Lichtbündelausschnitt 21' am Filter reflektiert und gelangt nach erneutem Durchgang durch die Empfangsoptik 15 auf die Zielscheibe 20. Da die Zielscheibe 20 beispielsweise als eine Mattscheibe ausgebildet ist, entsteht am Auftrittpunkt des Lichtbündelausschnittes 21' auf der Zielscheibe ein Lichtspot 22. Bei Drehung des Lichtempfängers 10 um eine vertikale Achse V bewegt sich dann der Lichtspot 22 auf der Zielscheibe 20 entlang einer Linie, die senkrecht zur Zeichnungsebene verläuft. Analog dazu bewegt sich der Lichtspot 22 bei Drehung des Lichtempfängers 10 um eine horizontale Achse H auf der Zielscheibe 20 entlang einer Linie, die in der Zeichnungsebene liegt.
Während dem normalen Funktionsbetrieb der Lichtschranke ist die Justageplatte aus dem Strahlengang entfernt und wird bis zu einer erneuten Justage außerhalb des optischen Strahlenganges aufbewahrt.

In Figur 3 ist eine beispielhafte Ausgestaltung der Justageplatte 18 dargestellt. Diese zeigt im unteren Bereich die Lichteintrittsöffnung 19 und im oberen Bereich die Zielscheibe 20. Im Zentrum der Zielscheibe 20 ist ein Fadenkreuz 23 sowie eine den Sollpunkt umschließende kreisförmige Linie 24 aufgebracht. Anhand der Lage des Lichtspots 22 innerhalb der Zielscheibe 20 ist somit die Güte der Justage des Lichtempfängers 10 in Bezug auf den Lichtsender 9 ablesbar.

## Patentansprüche

1. Lichtschranke mit einem auf einen Lichtempfänger (10) ausrichtbaren Lichtsender (9), welcher eine Lichtquelle (12) und eine Sendeoptik (13) aufweist und ein vorzugsweise paralleles Lichtstrahlbündel (11) ausstrahlt und mit einem auf den Lichtsender (9) ausrichtbaren im Abstand zum Lichtsender (9) angeordneten Lichtempfänger (10), welcher mittels einer Empfangsoptik (15) das vom Lichtsender (9) ausgestrahlte Lichtbündel (11) auf ein Empfangselement (17) fokussiert und dabei in Abhängigkeit von dem empfangenen Licht ein elektrisches Signal erzeugt, **dadurch gekennzeichnet, dass** zwischen der Empfangsoptik (15) und dem Empfangselement (17) eine teilreflektierende optische Grenzfläche vorgesehen ist und dass zur Justage des Lichtempfängers (10) auf den Lichtsender (9) vor der Empfangsoptik (15) eine Justageplatte (18) mit einer Lichteintrittsöffnung (19) und einer mattierten Zielscheibe (20) angeordnet ist.

2. Lichtschranke nach Anspruch 1, **dadurch gekennzeichnet, dass** die Fläche der Lichteintrittsöffnung (19) in der Justageplatte (18) nur etwa 5% der Eintrittsfläche der Empfangsoptik (15) beträgt.

3. Lichtschranke nach einem der vorhergehenden Ansprüche, **dadurch gekennzeichnet, dass** der Ort der Lichteintrittsöffnung (19) in der Justageplatte (18) außerhalb der optischen Achse (14) der Empfangsoptik (15) angebracht ist.

4. Lichtschranke nach einem der vorhergehenden Ansprüche, **dadurch gekennzeichnet, dass** die Justageplatte (18) so vor der Empfangsoptik (15) angebracht ist, dass die Lichteintrittsöffnung (19), die optische Achse (14) der Empfangsoptik (15) und die Zielscheibe (20) auf einer Linie angeordnet sind.

5. Lichtschranke nach einem der vorhergehenden Ansprüche, **dadurch gekennzeichnet, dass** auf der Zielscheibe (20) um den Sollpunkt herum ringförmige Linien (24) angeordnet sind.

6. Lichtschranke nach einem der vorhergehenden Ansprüche, **dadurch gekennzeichnet, dass** die teilreflektierende optische Grenzfläche im Lichtempfänger (10) die Lichteintrittsseite eines optischen Filters (16) ist.

7. Lichtschranke nach einem der vorhergehenden Ansprüche, **dadurch gekennzeichnet, dass** die teilreflektierende optische Grenzfläche durch Aufbringen von optischen Schichten in ihrem Reflexionsgrad angepasst ist.

8. Lichtschranke nach einem der vorhergehenden Ansprüche, **dadurch gekennzeichnet, dass** das Empfangselement (17) aus mehreren einzelnen Photoelementen besteht, die zeilen- oder matrixförmig zusammengefügt sind.

9. Lichtschranke nach einem der vorhergehenden Ansprüche, **dadurch gekennzeichnet, dass** der Lichtsender (9) und der Lichtempfänger (10) als Sicherheitseinrichtung an einer Maschine, insbesondere einer Presse (1), mit justierbaren Halterungen (7, 8) befestigt ist.

10. Lichtschranke nach Anspruch 10, **dadurch gekennzeichnet, dass** die justierbaren Halterungen (7, 8) am beweglichen Werkzeugteil (2) der Presse (1) angebracht sind.

## Claims

1. A light barrier having a light receiver (10) alignable to a light emitter (9), the emitter including a light source (12) and transmission optics (13) and emitting a substantially parallel light beam (11), the light receiver (10) and the light emitter (9) being arranged to be aligned with each other for focusing the light beam (11) from the light emitter (9) by means of reception optics (15) on a reception element (17) for generating an electrical signal as a function of the light received, **characterized by** having a partially reflecting optical boundary surface between the reception optics (15) and the reception element (17), and an alignment plate (18) including a light entry opening (19) and a target disk (20) formed to be positioned in front of the reception optics (15) for aligning the light receiver (10) onto the light emitter (9).

2. A light barrier according to claim 1, **characterized in that** a surface area of the light entry opening (19) in the alignment plate (18) is about 5% of an entry surface of the reception optics (15).

3. A light barrier according to any of the preceding claims, **characterized in that** the position of the light entry opening (19) in the alignment plate (18) is offset relative to an optical axis (14) of the reception optics (15).

4. A light barrier according to any of the preceding claims, **characterized in that** the alignment plate (18) is adapted to be arranged in front of the reception optics (15) so that the light entry opening (19), the optical axis (14) of the reception optics (15), and the target disk (20) are on a common line.

5. A light barrier according to any of the preceding claims, **characterized in that** the target disk (20) includes annular lines (24) arranged about a nominal point.

6. A light barrier according to any of the preceding claims, **characterized in that** the partially reflecting optical boundary surface in the light receiver (10) is a light entry side of an optical filter (16).

7. A light barrier according to any of the preceding claims, **characterized in that** the partially reflecting optical boundary surface includes optical layers for adjusting a reflectivity of the surface.

8. A light barrier according to any of the preceding claims, **characterized in that** the reception element (17) comprises a plurality of individual photocells arranged in one of a line and a matrix form.

9. A light barrier according to any of the preceding claims, **characterized by** a safety mechanism having adjustable holders (7, 8) securing the light emitter (9) and the light receiver (10) to a machine, preferably a press (1).

10. A light barrier according to claim 10, **characterized in that** the adjustable holders (7, 8) are secured to the movable tool (2) of the press (1).

## Revendications

1. Barrière lumineuse comprenant un émetteur optique (9) orientable sur un récepteur optique (10) et qui présente une source optique (12) et une optique d'émission (13) et émet un faisceau de rayons lumineux de préférence parallèle (11), et un récepteur optique (10) orientable sur l'émetteur optique (9) et monté à distance de cet émetteur optique (9), qui focalise le faisceau lumineux (11) émis par l'émetteur optique (9) sur un élément de réception (17) au moyen d'une optique de réception (15) pour ainsi générer un signal électrique en fonction de la lumière reçue,
**caractérisée en ce qu'**une surface de séparation optique à réflexion partielle est prévue entre l'optique de réception (15) et l'élément de réception (17) et **en ce qu'**une plaque d'ajustage (18) comprenant une ouverture d'entrée de lumière (19) et une cible dépolie (20) est disposée pour ajuster le récepteur optique (10) sur l'émetteur optique (9) en amont de l'optique de réception (15).

2. Barrière lumineuse selon la revendication 1,
**caractérisée en ce que** la surface de l'ouverture d'entrée de lumière (19) dans la plaque d'ajustage (18) ne représente que 5 % environ de la surface d'entrée de l'optique de réception (15).

3. Barrière lumineuse selon l'une quelconque des revendications précédentes,
**caractérisée en ce que** l'emplacement de l'ouverture d'entrée de lumière (19) dans la plaque d'ajustage (18) est monté à l'extérieur de l'axe optique (14) de l'optique de réception (15).

4. Barrière lumineuse selon l'une quelconque des revendications précédentes,
**caractérisée en ce que** la plaque d'ajustage (18) est montée en amont de l'optique de réception (15) de sorte que l'ouverture d'entrée de lumière (19), l'axe optique (14), l'optique de réception (15) et la cible (20) soient disposés sur une ligne.

5. Barrière lumineuse selon l'une quelconque des revendications précédentes,
**caractérisée en ce que** des lignes annulaires (24) sont disposées sur la cible (20) autour du point de consigne.

6. Barrière lumineuse selon l'une quelconque des revendications précédentes,
**caractérisée en ce que** la surface de séparation optique à réflexion partielle dans le récepteur optique (10) est le côté d'entrée de lumière d'un filtre optique (16).

7. Barrière lumineuse selon l'une quelconque des revendications précédentes,
**caractérisée en ce que** le degré de réflexion de la surface de séparation optique à réflexion partielle est adapté en appliquant des couches optiques.

8. Barrière lumineuse selon l'une quelconque des revendications précédentes,
**caractérisée en ce que** l'élément de réception (17) est composé de plusieurs cellules photoélectriques individuelles qui sont assemblées en forme de ligne ou de matrice.

9. Barrière lumineuse selon l'une quelconque des revendications précédentes,
**caractérisée en ce que** l'émetteur optique (9) et le récepteur optique (10) servent de dispositif de sécurité fixé à une machine, en particulier une presse (1), avec des supports ajustables (7, 8).

10. Barrière lumineuse selon la revendication 10,
**caractérisée en ce que** les supports ajustables (7, 8) sont montés sur la partie mobile d'outil (2) de la presse (1).
